Europäisches Patentamt

European Patent Office

Office européen des brevets

(11) Publication number: **0 339 781**
**A2**

## (12) EUROPEAN PATENT APPLICATION

(21) Application number: **89302491.9**

(51) Int. Cl.⁴: **G01N 27/26**

(22) Date of filing: **14.03.89**

(30) Priority: **29.04.88 US 187760**

(43) Date of publication of application:
**02.11.89 Bulletin 89/44**

(84) Designated Contracting States:
**CH DE FR GB IT LI SE**

(71) Applicant: **BECKMAN INSTRUMENTS, INC.**
**Executive Office 2500 Harbor Boulevard Box 3100**
**Fullerton California 92634(US)**

(72) Inventor: **Burolla, Victor Paul**
**1322 Shawnee Road**
**Livermore California 94550(US)**

(74) Representative: **Fitzpatrick, Alan James et al**
**Fitzpatricks 4 West Regent Street**
**Glasgow G2 1RS Scotland(GB)**

(54) **Automated capillary injector.**

(57) A pressure integrated apparatus and process for the measured injection of sample into a capillary for electrophoresis is disclosed. Preferably the capillary is mounted in a serpentine path to a cartridge body having a bottom. The capillary, previously filled with electrolyte depends a distance below the bottom of the cartridge and has its periphery sealed to the cartridge. Typically, the cartridge is registered at the depending capillary to a vial of sample. The vial of sample is moved into substantial gas tight relation with the cartridge so that the depending capillary is below the surface of liquid within the sample vial. The vial is then communicated to a source of substantially constant fluid pressure in the order of 1 lb./inch². At the same time, a pressure gauge monitors the pressure of the vial and outputs a signal to integration apparatus such as a microprocessor. By time integration of the area under a pressure curve, precise monitoring of the amount of fluid introduced into a capillary occurs. Assuming a total capillary capacity of several microliters, injections of sample in the order of 5 nanoliters with an accuracy of plus or minus 2% is possible.

FIG. 2

Xerox Copy Centre

## AUTOMATED CAPILLARY INJECTOR

## BACKGROUND OF THE INVENTION

This invention relates to electrophoresis. More particularly in capillary electrophoresis an injection technique is disclosed for injecting sample to a capillary, the capillary preferably being held within a cartridge.

## SUMMARY OF THE PRIOR ART

Capillary electrophoresis is known. Typically a capillary (in the order of 50 microns inside diameter) is filled with electrolyte. The width of the capillary is 350 microns outside diameter. The length of the capillary is from 20 to 100 cm. Consequently it has a total volume in the order of 1 to 2 microliters. Needless to say, the capillary is fragile.

The capillary is initially filled with electrolyte. Sample must be accurately injected in small amounts for the required analysis by electrophoresis.

The injection of sample to a capillary has not been without problems in the prior art.

First, electric potential across the capillary has been used for the injection of sample. In this process an electropotential is placed across the capillary. One end of the capillary is immersed in a vial of liquid sample. The other end of the capillary is immersed in a vial of electrolyte. The required electric potential is applied between vials to produce voltage differential between the distal ends of the capillary. Sample is drawn into the capillary.

Unfortunately and utilizing this technique, sample becomes subject to classification on injection. That is to say, the very forces which are being utilized to draw the sample into the capillary are the same forces which cause classification of the sample once it is in the capillary. Utilizing electropotential, there is no way to realize the precise purity of the sample drawn to the capillary.

The drawing or siphoning of a sample to a capillary is not without difficulty. Simply stated, one can never be sure with exactitude the amount of sample entered into the capillary.

The transfer of chromatographic techniques, especially those techniques used from high performance liquid chromatography (so-called "HPLC") is not appropriate. Typically, the volumes processed in the capillary electrophoresis are less than 1/1,000ths of those volumes utilized in high performance liquid chromatography. Consequently, sample vials for the positive displacement trapping and thereafter injection of volumes of sample are too small to be effectively utilized with electrophoresis.

## SUMMARY OF THE INVENTION

A pressure integrated apparatus and process for the measured injection of sample into a capillary for electrophoresis is disclosed. Preferably the capillary is mounted in a serpentine path to a cartridge body having a bottom. The capillary, previously filled with electrolyte depends a distance below the bottom of the cartridge and has its periphery sealed to the cartridge. Typically, the cartridge is registered at the depending capillary to a vial of sample. The vial of sample is moved into substantial gas tight relation with the cartridge so that the depending capillary is below the surface of liquid within the sample vial. The vial is then communicated to a source of substantially constant fluid pressure in the order of 1 lb./inch$^2$. At the same time, a pressure gauge monitors the pressure of the vial and outputs a signal to integration apparatus such as a microprocessor. By time integration of the area under a pressure curve, precise monitoring of the amount of fluid introduced into a capillary occurs. Assuming a total capillary capacity of several microliters, injections of sample in the order of five nanoliters with an accuracy of plus or minus 2% is possible.

Other Objects, Features and Advantages

An object to this invention is to disclose a simple and volumetrically accurate method for the inject tion of sample to an electrolyte filled capillary in preparation for electrophoresis. Typically, the capillary depends downward from the bottom of a cartridge body. The capillary is sealed at its perimeter to the cartridge body. The capillary, already flooded with electrolyte, is immersed in a sample containing vial. The vial is confronted and sealed substantially air tight to the bottom of the cartridge around the capillary. Pressure is supplied to the capillary from a substantially constant pressure source -- in the range of 1 psi. Fluid is injected to the capillary.

An advantage of this method and apparatus for pressure injection is that the capillary when held by the cartridge is uniquely positioned for sample injection. By the expedient of knowing the pressure and measuring the time exposure of the capillary to the pressure, the amount of sample can be accurately determined.

A further object of the invention is to disclose apparatus for the precision measurement of injected sample. According to this aspect of the invention, the pressure within the sample vial is closely monitored by a pressure transducer. The pressure transducer outputs to an integration device, such as a microprocessor. By the expedient of integrating the area under the pressure curve with respect to time, the volume of sample injected can be accurately measured.

An advantage of this aspect to the apparatus and process is that high accuracy of the injection technique can be achieved. At the same time, very small amounts of sample can be injected. In sample injections of the magnitude of five nanoliters, into a cartridge containing several microliters, reproducible results of the sample injection in the range of plus or minus 2% have been achieved!

A further advantage of the injection technique is that the reliance on a perfect seal between the vial and the capillary is not required. Where slow -- but relatively constant -- leaks change the pressure in the sample vial from which sample injection occurs, the integration is capable of preserving accurate measurement. Simply stated, by knowing accurately the pressure of the vial, adjustments to the integration can be made to vary the time exposure of the capillary to the extant sample.

An advantage of this aspect of the invention is that the integration can be adjusted for non-linearities encountered. For example, when the sample is initially pressurized, flow into the capillary will not be linear with pressure. Likewise, when the sample is depressurized at the end of sample injection, non-linearities and flow rate will likewise be encountered. Specifically, these nonlinearities can be tailored in the integration. Further, the nonlinearities can be adjusted to the particular pressure which happens to be present when the sample is injected.

An additional advantage of this aspect of the invention is that adjustment can easily be made for the viscosity of the sample.

Yet another object to this invention is to disclose an automated sequence for sample injection to a cartridge mounted capillary. A vial having a sample therein covered by septum. A lever arm having paired hypodermics is registered underlying the depending capillary and overlying the septum of the vial. When the vial is first moved upwardly, piercing of the septum at the hypodemics first occurs. Thereafter, the lever arm is forced between the vial and the overlying cartridge to register to a block having paired O-ring seals between the cartridge at the upper end and the lever arm around the hypodemics at the lower end. During the full upward movement of the vial, the capillary passes through one of the hypodermics into the sample containing the vial. When full upward movement of the vial has occurred, a seal between the cartridge, block and lever arm has occurred at the O-rings while a seal to the vial at the hypodermics piercing the septum has occurred. By the expedient of automated threading of the capillary through one of the hypodermics and into and below the level of liquid sample in one of the vials, the pressure injection of sample into the vial can occur on an automated basis.

An advantage of this aspect of the invention is for the first time sample injection in a capillary electrophoresis application can be completely automated to a high degree of accuracy.

## BRIEF DESCRIPTION OF THE DRAWINGS

Other objects, features and advantages of this invention will become more apparent after referring to the following specification and attached drawings in which:

Fig. 1A is a perspective view of a cartridge having an interior volume of the introduction of coolant with the cover removed so that the full detail of the capillary path in the interior of the cartridge can be seen;

Fig. 1B is a perspective view of the rear side of the cartridge of Fig. 1A with the detail of the detector aperture being made clear;

Fig. 2 is an exploded view of a table having sample vials, the vials being moved to and from by pistons to positions of sealing registration to an overlying cartridge for electrophoresis;

Fig. 3 is a view along lines 2-2 of Fig. 1 illustrating sample vials contained in overlying and underlying concentric rings, the rings being utilized to register the sample vials to appropriate position with respect to the cartridge;

Fig. 4 is a detail adjacent the sample cartridge illustrating the registration of the vial to a capillary with pressure injection occurring; and

Fig. 5 is a graphic illustrating the integration of an injection with respect to time, this integration illustrating leading and trailing nonlinearities which are adjusted for the ambient pressure on the vial.

Figs. 6A-6C are a cartoon schematic series of a lever mounted hypodermic shown overlying a cartridge and depending capillary with Fig. 6A illustrating the assembly in a position of initial registry, Fig. 6B illustrating piercing of the septum sealing the cartridge by the hypodermic, and Fig. 6C showing the capillary penetrating the sample vial for the loading of sample in accordance with this invention; and,

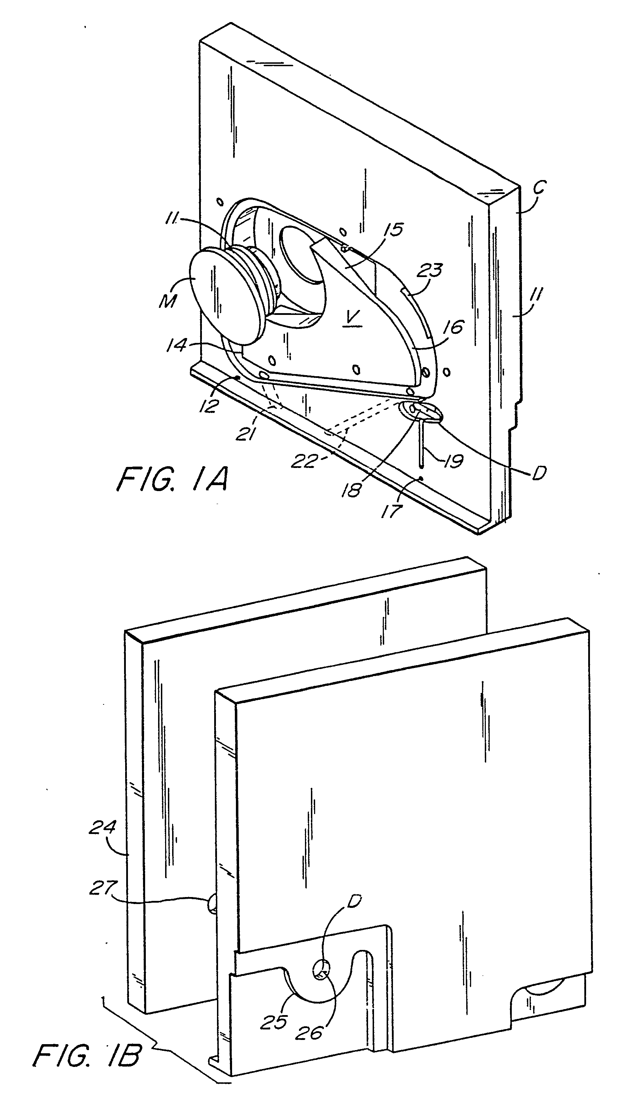

Referring to Fig. 1A, the interior of a cartridge C is set forth. Cartridge C defines an interior volume V, which volume V contains coolant during cartridge confined electrophoresis.

Capillary Q is initially threaded through aperture 12 and passed a sufficient number of times around a mandrel M having helical threads 11. Threads 11 are given sufficient depth and spacing so that remote parts of the capillary do not make electric contact or arc through the capillary during the electrophoretic process. As illustrated in the exploded perspective of Fig. 1A, the mandrel is first wound and thereafter inserted interior of the volume V in the cartridge C.

The capillary Q typically is aligned along vertical surface 14 to the first wind around mandrel M. After the requisite number of turns to accommodate the intended length of the capillary, the capillary passed over exit surface 15. At this surface the capillary gradually turns vertically downward departing exit surface 15 at point 16. Thereafter, the capillary passes across the detector aperture D, along a vertical exit passage 19 and finally through an exit aperture 17. The capillary Q is registered to a bar 18 within detector D, this bar having a small central aperture for the passage of light. As will hereinafter be set forth, passage of the light through the cartridge C at detector D allows the classified components to be identified.

Assuming that the capillary is completely threaded interior of the cartridge C, an O-ring is thereafter threaded completely around the interior of the volume V. This O-ring in passing over the capillary Q, traps the capillary in place.

Once the O-ring is in place, a cover 24 is placed over and sealed in position, enclosing the cartridge.

Turning to the view of Fig. 1B, the rear surface of the cartridge can be seen and understood. Detector D has a concentric and essentially circular gathering surface 25 for aligning optics to the aperture 26. Similarly, plate 24 has a similar aperture 27. Thus, when plate 24 closes the cartridge, light can pass through the cartridge and through the capillary Q for required detection of classified "bands" of like particles.

With the exception of the indentation of the cartridge to define gathering surface 25, the rear of the cartridge is essentially rectilinear.

A word relating to two conduits 21 and 22 shown in broken lines in Fig. 1A. These conduits 21 and 22 are for the entry and exit of cooling fluid used during the electrophoresis within the cartridge C. It can be seen that the conduits start at the bottom surface of cartridge C and extend into the volume V. Thus, before the electric potential is placed across the distal ends of the capillary Q, the entire volume of the cartridge C can be flooded with coolant. Likewise, and immediately before cartridges are removed, draining of the inner volume V can likewise occur.

Immediately before block 24 closes cartridge C, capillary Q has sealant placed on apertures 12 and 17. Such sealant, preferably a silicon rubber compound, effects a sealing of the periphery of the capillary Q to the cartridge C. As will hereafter become more apparent, this sealing enables fluid to be forced under pressure up the interior of the capillary Q.

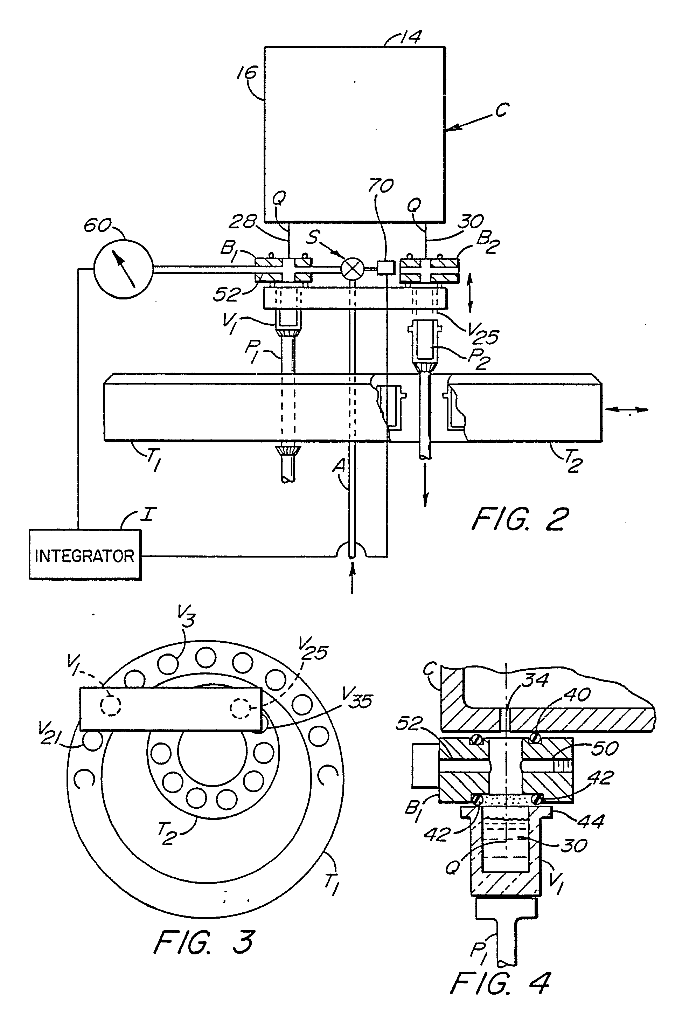

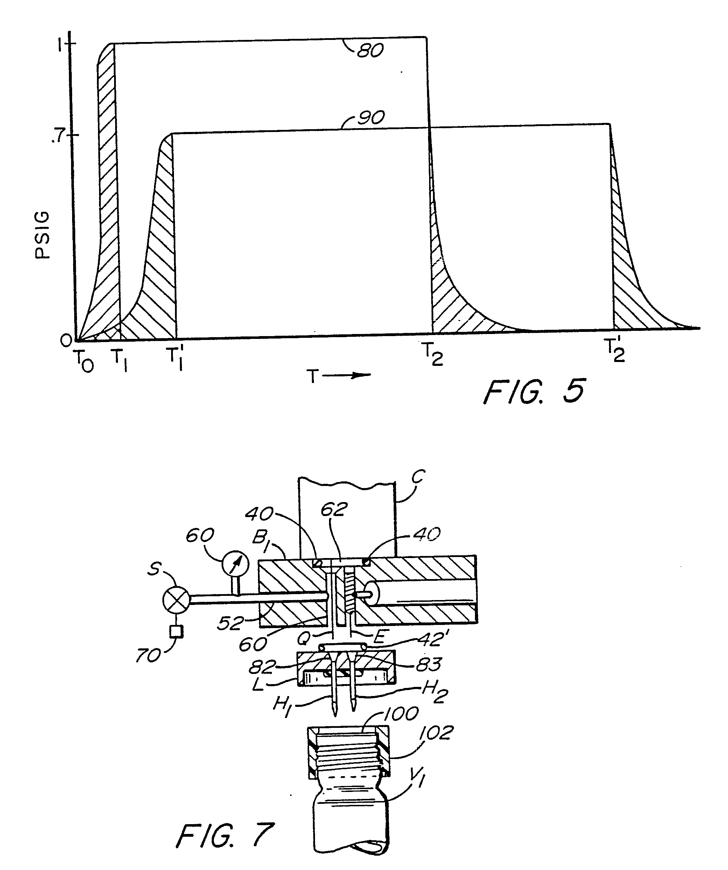

Referring to Figs. 2 and 3 the sample injection apparatus of this invention is schematically illustrated. Specifically and referring to Fig. 3, an outer concentric table T1 and an inner concentric table T2 contain a series of vials. Vials V1-V24 are contained at 24 spaced apart angular intervals about circular outer concentric table T1. Vials V25 through V35 are contained in the inner concentric table T2. As illustrated in both Figs. 2 and Figs. 4, vials V1 and V25 are respectively registered under a cartridge C.

Registry of cartridge C to the respective tables is easy to understand. Capillary Q interior of cartridge not only occupies the serpentine path previously described but depends at respective distal ends 28 and 30 from the bottom of the cartridge. It is these distal ends 28 and 30 which penetrate into and receive sample from the vials.

As will hereinafter be more fully set forth, end 28 depends into vial V1 and receives sample from that vial. At that same time, and in order to equilibrate pressure flow across the capillary, end 30 penetrates into vial 25. Unlike vial V1, vial 25 fluidly communicates with atmosphere. Thus any flow rate into the capillary Q will be dependent upon pressure placed on the sample in vial V1.

Once vials V1 and V25 are registered underlying the distal ends 28, 30 of the capillary Q depending from cartridge C, respective pistons P1 and P2 lift the vials V1 and V2 from their respective tables T1 and T2. The vials are lifted until they register with blocks B1 and B2. Further lifting occurs from the diagram of Fig. 4 until the respective blocks B1 and B2 register to the bottom of the cartridge C. This registry can best be understood with respect to Fig. 4.

Referring to Fig. 4, vial V1 is illustrated, urged upwardly by piston P1. Vial V1 contains a sample 30. It is the purpose of this invention to inject sample 30 into the capillary Q which capillary has already been filled by electrolyte.

A block B is intermediate the cartridge C and the vial V. The purpose of block B1 can be discussed first. Its construction will thereafter easily follow.

The purpose of block B1 is to permit a pressure seal of the vial V with respect to the cartridge C. Typically, capillary Q is sealed at seal 34 at the point where it depends from the cartridge C. Such sealing occurs around the periphery of the capillary C.

The reader can simply understand what happens when fluid under pressure is introduced at the bottom of the capillary. Typically, the pressure will cause fluid to flow into the capillary.

It is also known that the precise rate of flow into the capillary will be a function of the pressure and the time it is applied.

It will be understood that capillary C is very small. For example, capillary C can be in the order of 50 microns inside diameter. The outside diameter of the capillary C will be on the order of 500 microns. Assuming that the capillary is in the order of 100 cm long, a volume in the order of 1 to 2 microliters will constitute the entire volume of the capillary. Typically, and in preparation for electrophoresis, the capillary is filled with electrolyte.

It is the purpose of the injection herein disclosed to inject the volumes in the order of 5 or 10 nanoliters.

It will be seen that block B includes a first overlying set of O rings 40 and a second underlying set of O rings 42. When vial V is urged at and its flange 44 into registry with O ring 42, a seal will occur.

Likewise, when O rings 40 are urged into contact with the bottom of the cartridge C another seal will occur.

Those skilled in the chemical arts will realize that the seals can be other than perfect. For example, the seal around the periphery 34 of the capillary Q at the cartridge can leak. Likewise, leakage can also occur at O rings 40, 44.

It has been experimentally determined that the leakage encountered in these environments is essentially constant. Thus, assuming that the interior of the vial V is subjected to a constant pressure source, the pressure within the vial V will quickly equilibrate to a constant pressure. It is the purpose of this invention to determine this pressure, integrate it with respect to time to determine the flow rate and to use the determined flow rate to precisely measure the volumes introduced into the capillary Q.

The construction of block B1 may now be set forth.

Referring to block B1, it has a first aperture 50. It is through aperture 50 that gas (preferably nitrogen) is introduced under constant pressure. Such introduction occurs only after the seals 40, 42 are registered respectively to the cartridge C and vial V1.

Aperture 52 is for the accurate measure of pressure interior of the vial V1. Specifically, by knowing precisely the pressure interior of the vial V1, accurate integration with respect to time of the pressure within the vial V can occur.

Returning to Fig. 1, the remaining apparatus can be seen. A pressure transducer 60 reads the pressure interior of conduit 52 on block B1. Pressure transducer 60 outputs a signal to integrator I.

Integrator I has an operative connection to a solenoid valve S through a solenoid 70. By the sequence of opening solenoid valve 70, integrating the pressure interior of the vial V1 with respect to time and closing the solenoid valve S responsive to a measured amount of sample, quantitative measure of sample injected to the capillary tube can be made.

An operative example of this measurement will first be set forth and explained with respect to the graphical presentation of Fig. 5. Thereafter, and as a part of this application, the applicable computer programs utilized for the integration will be set forth. Finally, some attention will be directed to the nonlinearity. The reader will understand that the combination of such nonlinearities may well have to be empirically established.

Referring to Fig. 5, a pressure time integration is disclosed. Assuming that solenoid valve S opens at $t_o$,

pressure equilibration will take place in a time interval $t_0 t_1$. When full pressure is reached (here shown in the range of 1 psig), that pressure remain on the capillary until until time $t_2$. At time $t_2$, solenoid valve S will close.

As can be plainly seen, two nonlinearities are present. These nonlinearities are between time $t_0$ and time $t_1$ and after time $t_2$. For the convenience of the viewer, the nonlinearities are shaded.

Simply stated, by integrating the area under the time pressure curve 80, one can precisely determine the flow rate.

Referring to the nonlinearities, their value will be empirical. They will vary as the pressure rate on the valve V vary. Reference to a second curve 90 is instructive.

Referring to second curve 90 it is assumed that the seals between the vial V1 and the ambient are not as perfect. Consequently the pressure shown rises to approximately 7/10ths of a psi.

Consequently, and in order to realize the same area under curve 90 as is present under curve 80, the time of the exposure to pressure is prolonged. Specifically, valve $t_0$ opens and closes at a much later time $t^2$.

Additionally, the nonlinearities will change. Specifically, the nonlinearity between the time $t_0$ and time $t_1'$ when vial V realizes a constant pressure will have changed. Likewise, the nonlinearity present after $t_2'$ will likewise have changed.

The reader will understand that other nonlinearities can change the function of this equation. for example, sample viscosity can be such a factor. Temperature of the sample can likewise effect flow rate. Appropriate adjustment can be made by those skilled in the art.

The implementation of this discovery is relatively simple. Pressure transducer 60 is a transducer manufactured by the Fujikura company of Japan.

Integrator I constitutes a microprocessor manufactured by the Motorola of Sunnyvale, California and sold under the designation "68000".

A program written in language "C" for operating the integrator is disclosed table. A compiler for the language "C" is utilized. This compiler may be obtained from Manx Software Systems of Shresbury, New Jersey and is sold under the trademark "AZTEC". This program can be altered to suit the particular integrator utilized.

```
#include "datastr.h"

press ( )

{

        int i;

        int tenths;

        int hdrds;

        double area_sum;

        double prev_pressure;

        double pressure;

        double total_time;

        double readpress( );


        total_time = (double) atoi( ppressstr.time );

        total_time = total_time / 10 - TAIL;

        tenths = 0;

        hdrds = 0;


        area_sum = 0.0;

        prev_pressure = 0.0;
```

7

```
S-inj( );

display( 1, " 0.0 " );

do {

        delay100(1);

        hdrds++;

        pressure = readpress( );

        area_sum = area_sum + 0.01 * prev_pressure + 0.5 *

                                ( 0.01 * ( pressure - prev_pressure ) );

        prev_pressure = pressure;

        if( hdrds == 10 ) {

                tenths++;

                dispsec( tenths );

                hdrds = 0;

        }

        if( stopflg ) {

                break;

        }

} while( area_sum + 0.005 > total_time >

injrinseoff( );
```

```
if( !stopflg ) {

    for( i = 0; i < (int) ( TAIL * 10 ); i++ ) {

        delay( 1 );

        tenths++;

        dispsec( tenths );

    }

}

}
```

Referring to Fig. 7, an apparatus utilized with this invention to render the disclosure compatible with septum enclosed cartridges is set forth. A portion of cartridge C is shown conventionally overlying apparatus which is substantially the same as that illustrated with respect to Fig. 4. Block B1 is illustrated having a vertical channel 60 with an upper gathering frustum contoured aperture. This aperture gathers depending capillary Q and causes it to be centered as it depends through channel 60.

As previously illustrated, gas pressure is communicated interior of channel 60 through a gas channel 52. Gas is received from a solenoid valve 5 control by solenoid 70. Over the schematic of Fig. 4, a second vertical channel 72 with a depending electrode 74 has been added. As will be set forth immediately below, the electrode and the capillary are introduced through the septum of a sealed vial by a lever arm with two attached hypodermic needles. This scheme enables commercially available sealed vials to be utilized in the sample injection here set forth.

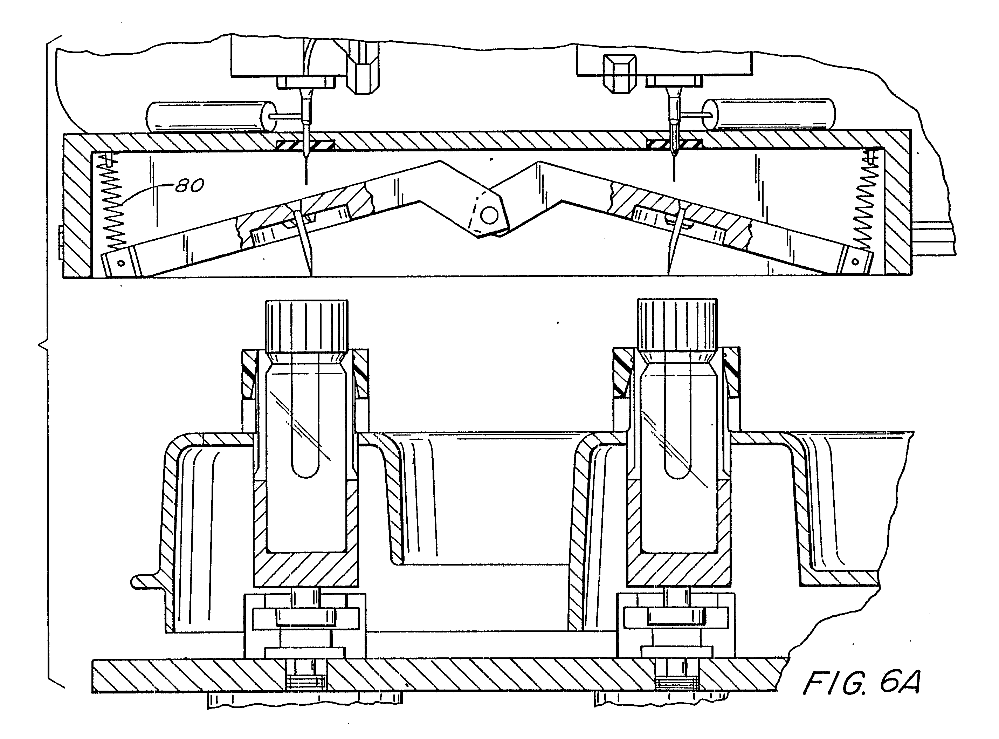

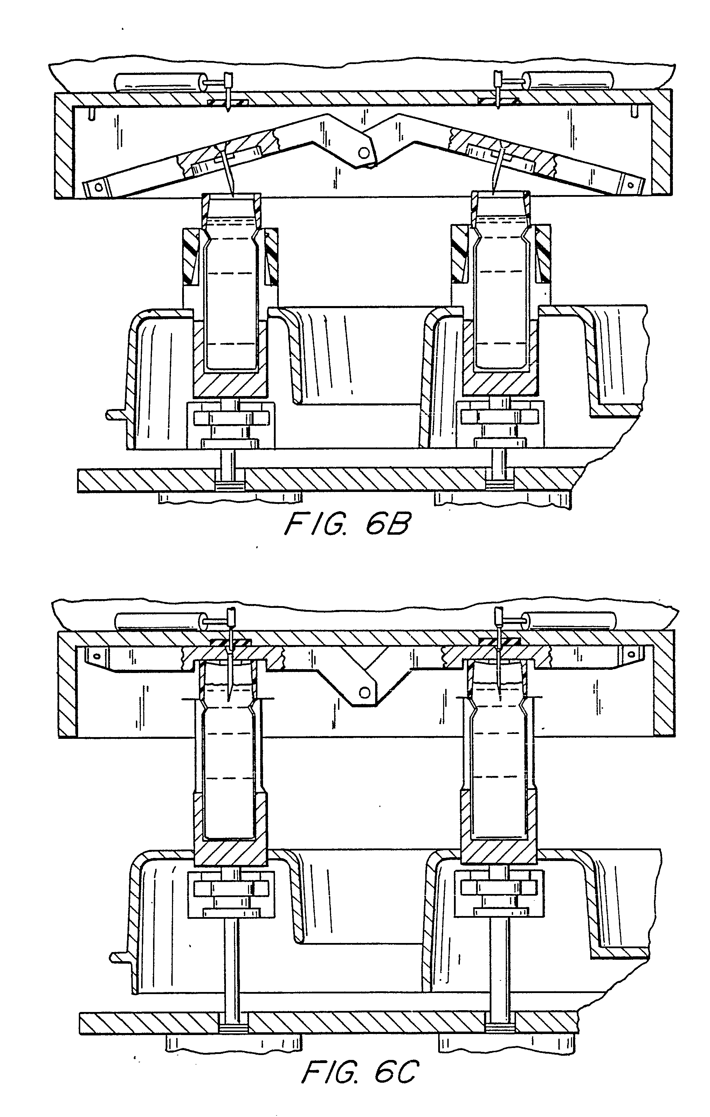

Referring to Fig. 7, a lever arm L is utilized. Lever arm L depends from the bottom of block B1 and is biased to the position shown in Fig. 6A by a spring 80. Two hypodemics H1 and H2 each are attached to and depend on the bottom side of lever arm L. These hypodermics are sized to be considerably larger than capillary Q and electrode E. It is by threading these hypodermics that capillary Q at its distal end makes entrance into the interior of vial V1.

The construction of the vial V1 -- which is typical of the remainder of the vials -- is easy to understand. Typically, vial is covered by a septum 100. Septum 100 is locked to the top of the vial by a cap 102. Septum is typically formed from a material that allows puncture by hypodermics H1 and H2.

Having set forth the construction of the apparatus with respect, operation can now be understood. Initially, and as illustrated in Fig. 6A, vial V1 is registered below the distal end of a depending capillary Q. Thereafter the vial V1 moves upwardly.

Upon such upward movement, hypodermics H1 and H2 pierce septum 100. Spring 80 is given sufficient force to prevent upward movement of level arm L until after piercing of the septum 100 has occurred.

Some attention can be given to the angle of penetration of hypodermic H through the septum.

Since it is required that the septums be threaded with electrodes or capillaries, their respective openings must be downwardly directed. That is to say, the hypodermics cannot open to the side.

This being the case, it will be seen that the hypodemics at first pierce the septums with their beveled edge. Thereafter the beveled edge is drawn inwardly towards the pivot arm. Such motion tears the septum cap and prevent septum material displaced by the puncture form clogging the hypodemic.

Finally, and an illustrated in Fig. 6C, full upward movement of lever arm L registers O-ring seals 40 and 42' to the lever arm L and the bottom of cartridge C, respectively. Such registration effects the seal previously described.

It will thus be seen that with the apparatus operated in the sequence of Figs. 6A - 6C, that the disclosed apparatus and process is capable of automation for the injection of sample to a high degree of accuracy.

**Claims**

1. A process for injecting an electrolyte filled capillary with sample, said capillary protruding from the bottom of a holding body and sealed around the periphery of said capillary to said body adjacent the bottom thereof, said process comprising the steps of:
providing a vial;
filling said vial to a predetermined level with contained sample;
immersing said capillary as protruding from the bottom of said body in sample within said vial;
sealing said vial with respect to the bottom of said body around said capillary with said capillary still immersed in said sample;
after said sealing, exposing said sample to a substantially constant fluid pressure whereby sample flow from said vial into said immersed end of said electrolyte filled capillary occurs;
measuring the pressure on said sample during the time said sample is exposed to pressure;
integrating the pressure in said vial with respect to time to determine the volumetric flow of said sample into said electrolyte filled capillary; and, ceasing said exposing step responsive to the determination of volumetric flow at said integrating step to inject a fixed quantity of sample into said capillary.

2. The process of claim 1 and including the step of providing a second vial containing electrolyte;
immersing the remaining end of said capillary into said vial containing electrolyte;
maintaining said vial containing electrolyte at the same elevation as said vial with sample to maintain equal hydrostatic pressures at both vials independent of said exposing step.

3. A process for injecting a capillary with sample, said process comprising the steps of;
providing a capillary;
mounting said capillary to a body having a bottom so that said capillary protrudes downwardly from the bottom of said body in a depending fashion;
sealing the periphery of said capillary to said cartridge adjacent said bottom of said body;
filling said capillary as mounted to said body with electrolyte;
providing a vial containing a sample;
immersing said capillary as protruding from the bottom of said body at one end in said sample within said vial;
sealing said vial with respect to the bottom of said body around said capillary with said capillary immersed in sample;
after said sealing, exposing said sample to a substantially constant fluid pressure as sealed to the bottom of said body whereby sample flow from the vial flows into said one end of said electrolyte filled capillary immersed in said sample;
measuring the pressure over said sample during the time said sample is exposed to said fluid pressure;
integrating the pressure in said vial with respect to time to determine the volumetric flow of sample into said electrolyte filled capillary; and,
relieving said substantially constant fluid pressure responsive to integration to inject a fixed quantity of sample into said capillary.

4. The invention of claim 3 and wherein said mounting of said capillary to said body includes providing a cartridge having a serpentine path with two spaced apart exit paths protruding through the bottom of said cartridge;
mounting said capillary to said serpentine path within said cartridge with each of the distal ends of said capillary protruding downwardly from said cartridge;
sealing each said distal end with respect to said cartridge at said exit path.

5. The process of claim 4 and including registering a vial of electrolyte to the other distal end of said capillary.

6. The process of claim 5 and wherein said registered vial of electrolyte is maintained at the same elevation as said vial of sample to maintain equal hydrostatic pressure on said electrolyte filled capillary independent of said exposing of said sample to a substantially constant fluid pressure step.

7. Apparatus for injecting sample into a capillary, said capillary mounted to and protruding from the bottom of a body and sealed at the periphery of said capillary to the bottom of said body, said capillary filled with electrolyte, said apparatus comprising:

a vial;

liquid sample disposed within said vial and filling said vial to a predetermined level;

means for sealing said vial with respect to the bottom of said body around said depending capillary with said depending capillary end disposed within and extending below the level of liquid sample in said vial;

means for pressurizing said vial whereby flow of sample from said vial at said immersed end of said capillary occurs;

means for integrating the pressure on said vial with respect to time to determine the pressure induced volumetric flow of sample into said immersed capillary; and,

means for releasing said pressure means responsive to a determination of the volumetric flow by said integration.

8. The invention of claim 7 and including a second vial filled with electrolyte;

means for immersing the opposite end of said capillary in said second vial.

9. The invention of claim 8 and including means for maintaining said vial of electrolyte at the same elevation as said vial of sample.

10. Apparatus for injecting sample into a capillary filled with electrolyte including a cartridge having a bottom surface for receiving and holding said capillary;

a serpentine path disposed within said cartridge;

first and second spaced apart exits at opposite ends of said serpentine path extending through the bottom of said cartridge;

a capillary threaded to said serpentine path in said cartridge with the distal ends thereof protruding downwardly from said cartridge at a preselected distance below said cartridge;

electrolyte filling said capillary;

means for sealing said cartridge around the periphery of said capillary at each exit to produce ·a seal between the bottom of said cartridge and the outside of said capillary;

a vial for containing liquid sample disposed within said vial;

means for sealing said vial with respect to the bottom of said cartridge around said depending capillary at one of said exit paths with said capillary end disposable below said bottom and into said vial;

means for pressurizing said vial;

means for integrating the pressure on said vial with respect to time to determine the pressure induced volumetric flow of sample into said immersed capillary; and,

means for releasing said pressure means responsive to the determination of volumetric flow by said integration.

11. Apparatus for injecting sample from a vial closed and sealed by a septum into a capillary filled with electrolyte, said capillary mounted to a body having a bottom and sealed to said bottom at the periphery of said capillary, said apparatus comprising: a hypodermic, said hypodermic having an inside diameter exceeding the outside diameter of said capillary;

said capillary disposed with respect to said hypodermic for protruding through said hypodemic;

means for urging said hypodermic onto said septum for puncturing said septum with said hypodermic;

means for threading said capillary through said hypodermic whereby said capillary can extend downwardly and into said vial;

means for sealing said hypodermic with respect to the bottom of said body to produce a seal between the inside of said hypodermic and said vial through said hypodemic;

means for pressurizing said hypodermic whereby pressure is communicated through said hypodermic to said vial for inducing flow of sample within said vial into said capillary;

means for integrating the pressure on said hypodermic with respect to time to determine the pressure induced volumetric flow of sample within said vial into said capillary; and,

means for releasing said pressure on said hypodermic responsive to determination of the volumetric flow by said integration.

12. The invention of the claim 11 and wherein said hypodermic is mounted to a biased lever arm;

said hypodermic protrudes from the bottom of said lever arm to and towards the septum of said vial;

said lever arm having at the top thereof said means for sealing with respect to the bottom of said cartridge.

13. The invention of the claim 11 and wherein said sealing means includes means for defining a vertical conduit between the top of said lever arm at said hypodermic and the bottom of said body;

said means defining a vertical conduit and including an intersecting conduit;

said intersecting conduit including means for supplying fluid under substantially constant pressure and means for monitoring the pressure of said supplied fluid.

11

FIG. IA

FIG. IB

FIG. 2

FIG. 3

FIG. 4

*FIG. 5*

*FIG. 7*

FIG. 6A

EP 0 339 781 A2

FIG. 6B

FIG. 6C